# EUROPEAN PATENT SPECIFICATION

(11) **EP 2 998 927 B1**
(45) Date of publication and mention of the grant of the patent: **05.09.2018**
(21) Application number: 14306454.1
(22) Date of filing: 22.09.2014
(51) Int. Cl.: G06T 7/00, G06K 9/00

(54) **Method for detecting the bad positioning and the surface defects of specific components and associated detection device**
Verfahren zur Erkennung von schlechter Positionierung und Oberflächenfehlern spezifischer Komponenten und zugehörige Erkennungsvorrichtung
Procédé pour détecter le mauvais positionnement et les défauts de surface de composants spécifiques et dispositif de détection associé

(43) Date of publication of application: 23.03.2016
(73) Proprietor: ALSTOM Transport Technologies, 93400 Saint-Ouen (FR)
(72) Inventor: Gratacos- Marti, Pau, 08911 Badalona (ES); Cabre Puiggali, Francesc Xavier, 08027 Barcelone (ES); Esposito, Danilo, 08005 Barcelone (ES); Forest Collado, Josep, 17220 Gerone (ES); Torrent Palomeras, Albert, 17003 Gerone (ES); Zapico, Adrien, 31270 Frouzins (FR); Barrett, Joshua, Manchester M44FH (GB); Dixon, Steven, Dudley DY3 3Q (GB); Morley, David, Burton on Trent DE13 8LF (GB)
(74) Representative: Lavoix

(56) References cited:
- EP-A1- 1 600 351
- US-B2- 7 711 181
- US-B2- 8 121 400
- Michael Kazhdan: "3D Scan Matching and Registration", ICCV, 1 October 2005 (2005-10-01), XP055174016, Retrieved from the Internet: URL:http://www.cs.jhu.edu/~misha/ [retrieved on 2015-03-05]
- Yangyan Li ET AL: "GlobFit: Consistently Fitting Primitives by Discovering Global Relations", ACM SIGGRAPH 2011, 1 September 2011 (2011-09-01), XP055174011, Retrieved from the Internet: URL:http://vecg.cs.ucl.ac.uk/Projects/Smar tGeometry/globFit/globFit_sigg11.html [retrieved on 2015-03-05]
- Anonymous: "3D single-object recognition - Wikipedia, the free encyclopedia", , 22 February 2015 (2015-02-22), XP055171643, Retrieved from the Internet: URL:http://en.wikipedia.org/wiki/3D_single -object_recognition [retrieved on 2015-02-24]
- Anonymous: "Transformation matrix - Wikipedia, the free encyclopedia", , 22 February 2015 (2015-02-22), XP055171429, Retrieved from the Internet: URL:http://en.wikipedia.org/wiki/Transform ation_matrix [retrieved on 2015-02-23]

## Description

The present invention concerns a method for detecting the bad positioning and the surface defects of specific components of a vehicle in motion.

The vehicle in motion is, for example, a train in motion on a rail road.

In order to check the proper functioning of a vehicle, such as a train, it is crucial to determine whether specific components installed on the train are in good conditions, which means to check whether these components are well positioned, with no defects and are not missing.

To do that, it is common to stop the vehicle so that a worker goes all along the vehicle and manually checks that the specific components installed on the train are in good conditions and that the train unit is ready for the service. The inspection of the vehicle's components is therefore visual.

However, such a visual inspection appears to be hazardous as far as it is not reproducible and depends on the operator who can miss to check some components or miss to detect a bad positioning of one of the components. Moreover, it is also time consuming.

A method and a system for detecting and signaling defects and hazardous conditions of vehicle body parts are known from EP 1 600 351. The method comprises the alignment of the components of the vehicle to be checked with reference models of the components. Such a method is especially used to detect the presence of gauge related hazards for a rail vehicle whose model has been identified. In particular, the hazards detectable with this method are gauge incompatible vehicles, protruding structures from faulty vehicles or inadmissible load profile due to inappropriate loading.

However, such a method is not precise enough to accurately determine the bad positioning or the surface defects of specific components of the vehicle. In particular, such a method does not allow the detection of components of the size of the millimeter, such as screws or bolts, which could be missing.

One of the objects of the invention is to propose a method to automatically and accurately detect the bad positioning and the surface defects of some components of a vehicle regardless of their size, in particular components of the size of the millimeter.

The invention relates to a method for detecting the bad positioning and the surface defects of a specific component of a vehicle in motion, according to claim 1.

The method according to the invention may comprise one or more of the characteristics of claims 2 to 9 taken in isolation or in any technically possible combinations:
The invention also relates to a detection device, for detecting the bad positioning and the surface defects of a specific component of a vehicle in motion on a rail road, according to claim 10.

The invention will be better understood on reading the following description, which is given solely by way of example, and is written with reference to the appended drawings, in which:
- figure 1 is a schematic view of a detection device according to the invention;
- figure 2 is an organization chart of a method according to the invention;
- figure 3 is a screenshot representing a three dimensional representation of the region surrounding a specific component and a surrounding three dimensional model of the specific component;
- figure 4 is a screenshot similar to Figure 3, representing a roughly aligned three dimensional representation of the component, resulting from the alignment of the three dimensional representation with the surrounding three dimensional model;
- figure 5 is a screenshot, similar to Figure 4, cut in order to only keep the part of the roughly aligned three dimensional representation surrounding the specific component, the screenshot also representing a specific three dimensional model of the specific component;
- figure 6 is a screenshot similar to Figure 5, representing an accurately aligned three dimensional representation of the component, resulting from the alignment of the roughly aligned three dimensional representation with the specific three dimensional model;
- figure 7 is a screenshot of a real three dimensional representation of the specific component of figure 6;
- figure 8 is a screenshot of a disparity map of a specific component; and
- figure 9 is a screenshot of a disparity map of another specific component.

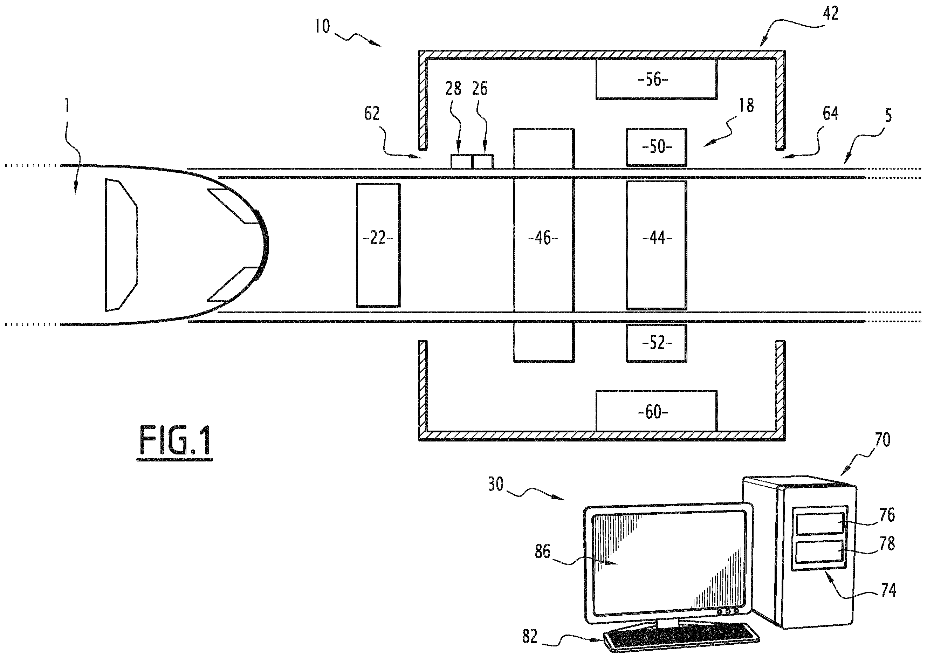

Figure 1 illustrates a vehicle 1, such as a train, in motion on a rail road 5 and a detection device 10 for detecting any bad positioning and/or surface defects of some components of the vehicle 1.

The vehicle 1 comprises at least one specific component. It is understood by "specific component" a component of the vehicle 1 that is to be checked during a scanning process of the vehicle 1. In particular, a specific component can be a nose cone underframe fairing panel, a nose fearing strut, an eurobalise antenna, an obstacle deflector, a suspension reservoir, a AWS (acronym for *Automatic Warning System*), a TPWS (acronym for *Train Protection and Warning System*), a traction motor, a life guard, an underpan, a sander, a gearbox, a traction rod, an UGMS (acronym for *Unmanned Geometry Measuring System*), an APC (acronym for *Automatic Power Control*) receiver, a side panel nose cone, a side skirt, a yaw damper, an access panel, a skirt access door, a plain axle end cover, a TASS speed sensor cover, an earth brush housing, a traction return housing, a WSP (acronym for *Wheel Slide Protection*), a door, a door step, a track access device and a train gauge.

Each specific component may comprise some small elements such as bolts, screws, or nuts for instance.

The detection device 10 is configured to detect the bad positioning and/or the surface defects and the missing parts of the specific components of the vehicle 1.

In one embodiment of the invention, the detection device 10 comprises a scanning system 18 for scanning the specific components of the vehicle 1 in motion, a reference library in an electronic device, an identification system 22 for identifying the vehicle 1, at least one sensor input 26 for measuring the speed of the vehicle 1, at least one inductive sensor 28 for detecting the presence of the vehicle 1, a calculator 30 for analyzing the scanned data coming from the scanning system 18 and a calibration system for calibrating the scanning system 18.

The scanning system 18 comprises at least one scanner. It is understood by "scanner" a set of lasers and cameras. Each camera of a scanner is equipped with a calculation unit.

The scanning system 18 is located in the vicinity of the rail road 5.

On figure 1, six scanners are represented. However, it is possible to have less or more scanners depending on the amount and of the type of the specific components of the vehicle 1.

The scanners of the scanning system 18 are located in a dedicated protection structure 42, for example a canopy or a warehouse. Each scanner comprises a box inside which are a set of lasers and a set of cameras.

Each scanner is specific to one or more specific component of the vehicle 1. In particular, the location and the amount of cameras and lasers of each scanner depend on the number and on the forms of the specific components that are to be scanned by the scanner. Indeed, the location of each scanner depends on the motion of the vehicle 1, on the angle from which the specific components are to be scanned such as bottom or side, on the characteristics of the specific components locations which may cause occlusion to the cameras, and on the layout of the specific components identified in three regions, inner, outer or side.

In one embodiment of the invention, illustrated on figure 1, there are two inner scanners 44, 46, two outer scanners 50, 52, and two side scanners 56 and 60.

The inner scanners 44 and 46 are configured to scan the specific components located at the bottom of the vehicle 1 in motion.

Each inner scanner 44, 46 comprises a set of lasers pointing straight up in several directions and a set of cameras looking in the directions of illumination of the lasers.

In one embodiment of the invention, the first inner scanner 44 comprises one three dimensional camera and one laser. It is understood by "three dimensional camera" a camera generating three dimensional images.

In one embodiment of the invention, the second inner scanner 46 comprises two three dimensional cameras and two lasers.

The outer scanners 50 and 52 are configured to scan specific components located at the outer side of the vehicle 1.

In one embodiment of the invention, each outer scanner 50, 52 comprises one three dimensional camera and two lasers. The lasers of each outer scanner 50, 52 points at an angle less than 90°. The three dimensional camera of each outer scanner 50, 52 is located between the two lasers in a configuration that enable scanning specific components that may be partially occluded by other elements of the vehicle 1. For example, the nose fearing strut of a vehicle is generally partially occluded to up-looking lasers by the nose cone fearing of the vehicle 1.

The side scanners 56 and 60 are configured to scan specific components located at the outer side of the vehicle 1.

In one embodiment of the invention, each side scanner 56, 60 comprises three three dimensional cameras, one two dimensional camera and two lasers. It is understood by "two dimensional camera" a camera generating two dimensional images.

For each side scanner 56, 60, one three dimensional camera and one laser are located close to the top of the box of the considered side scanner 56, 60, the laser pointing towards the side of the vehicle 1 and the three dimensional camera being tilted at a given angle.

The two others three dimensional cameras and the last laser are located close to the bottom of the box of the considered side scanner 56, 60, in a particular configuration that minimizes occlusions by themselves of the specific components.

The two dimensional camera is intended to grab images of a part of the vehicle 1 so that these images can be reviewed by an operator. The location of the two dimensional camera is chosen in order that the field of view of the two dimensional camera covers the whole width of the vehicle 1.

The calculation unit of each camera is a processor in interaction with a software application. The calculation unit of each camera is able to process the images acquired by the camera.

The calculation unit of each camera is configured to process the data acquired by each camera of the scanner in order to obtain for each specific component of the vehicle 1 a three dimensional representation R in the reference frame relative to the specific component. For each specific component, the reference frame is a coordinate system whose origin and axes are specific to the specific component. The reference frame has three axes: a longitudinal axis X corresponding to the length of the specific component defining a longitudinal direction, a transversal axis Y perpendicular to the longitudinal axis X and defining a first transversal direction and an elevation axis Z perpendicular to the longitudinal axis X and to the transversal axis Y and defining a second transversal direction.

The three dimensional representation R of a specific component is a three dimensional image.

The calculation unit of each camera is also configured to send the three dimensional representation R of each specific component to the calculator 30.

The protection structure 42 has two entrances 62, 64 in the direction in which the vehicle 1 moves: the first entrance 62 being located at the rear of the protection structure 42, and the second entrance 64 being located at the front of the protection structure 42. The terms "front" and "rear" are defined relative to the rolling direction of the vehicle 1.

The protection structure 42 is suitable to protect the scanning system 18 from climatic conditions such as rain, sun, snow, humidity and variations of temperature.

The reference library contains the configuration of all the possible vehicles 1 that might be checked with the detection device 10. In the reference library, each vehicle 1 is associated to a unit number. The reference library also contains information on all the specific components of each vehicle 1 such as their position in the reference frame. This information is the same for vehicles of the same type. It is understood by "vehicles of the same type", vehicles having the same structure and the same specific component located at the same location on each of those vehicles.

The reference library is contained in the memory of an electronic device which is connected to the calculator 30 and to the identification system 22.

The identification system 22 is an electronic system. For example, the identification system 22 is a RFID reader system that collects the information from tags installed in the vehicle 1. RFID is the abbreviation of *Radio-Frequency Identification.* It is understood by "RFID reader system", a wireless system that uses electromagnetic fields to transfer data in order to automatically identifying and tracking tags attached to some objects. It is understood by "tag", a keyword or a term assigned to a piece of information which is electronically stored in the tag.

The identification system 22 is installed at the entrance 62 of the protection structure 42 , before the scanners of the scanning system 18.

The identification system 22 is located in the vicinity of the rail road 5. More precisely, the identification system 22 is located between the rails of the rail road 5.

Thanks to the reference library, the identification system 22 is configured to identify the unit number and the type of the vehicle 1 and to send these data to the calculator 30.

The identification system 22 is also configured to trigger each scanner of the scanning system 18, when the specific component corresponding to the scanner is close from this scanner. In other words, when one of the specific components corresponding to a scanner is at a predetermined distance from the scanner, the cameras and the lasers of the scanner are activated. The predetermined distance between the scanner and one of the specific components is typically of the order of magnitude of 0.4 meters.

The sensor input 26 is configured to measure the speed of the vehicle 1. The sensor is, for example, the sensor InteliSens by the company Proton Products.

It is also possible that the detection device 10 contains more than one sensor input 26.

The inductive sensor 28 is configured to detect the passage of the vehicle 1 in front of the inductive sensor 28. It is understood by "inductive sensor", an electronic sensor comprising an induction loop, which detects metallic objects without being in contact with such objects.

In particular, the inductive sensor 28 is configured to record the position of the train by capturing the position of each weld axle as they pass by the inductive sensor 28.

It is also possible that the detection device 10 contains more than one inductive sensor 28.

As illustrated on figure 1, the sensor input 26 and the inductive sensor 28 are located in the vicinity of the rail road 5. More precisely, the sensor input 26 and the inductive sensor 28 are located inside the protection structure 42 so that the vehicle 1 first passes in front of the sensor input 26 and the inductive sensor 28 before passing through the scanning system 18. It is also possible that the sensor input 26 and/or the inductive sensor 28 are located outside the protection structure 42 at around ten meters from the entrance 62 of the protection structure 42.

The sensor input 26 and the inductive sensor 28 are configured to send the obtained speed of the vehicle 1 and the obtained position of the vehicle 1 to the identification system 22 and to the calculator 30.

The calculator 30 is, for example, a computer.

The calculator 30 comprises a processor 70, a memory 74, a model library 76 specific to each vehicle 1 and stored in the memory 74, a software application 78 stored in the memory 74 and that can be executed thanks to the processor 70, a man-machine interface 82 and a display unit 86.

The model library 76 contains information about each vehicle 1 that might be checked by the detection device 10. In particular, the model library 76 contains information about the specific components of the vehicle 1 that might be checked by the detection device 10.

For each vehicle 1 that might be checked by the detection device 10, the model library 76 comprises a surrounding three dimensional model M1 of the region surrounding each specific component, a specific three dimensional model M2 of each specific component alone and the positions in the reference frame of the surrounding three dimensional model M1 and the specific three dimensional model M2.

The surrounding three dimensional model M1 and the specific three dimensional model M2 are both three dimensional images.

For each specific component of a vehicle 1, the surrounding three dimensional model M1 is a reference three dimensional image, representing the region surrounding the specific component in the reference frame of the specific component.

For a given vehicle 1, it is understood by "region surrounding a specific component", the part of the vehicle 1 centered on the specific component, comprising the specific component and the elements of the vehicle 1 in close proximity to the specific component. In a surrounding three dimensional model M1 or in a three dimensional representation R of a specific component, the elements of the vehicle 1 surrounding the specific component occupy at least 51% of the image. However, it could be less than 50% provided that the three dimensional model M1 and the three dimensional representation R are very close to each other.

For each specific component of a vehicle 1, the specific three dimensional model M2 is a reference three dimensional image, representing the specific component alone in the reference frame of the specific component. In other words, on the specific three dimensional model M2, the specific component is surrounded by no other elements of the vehicle 1.

The first three dimensional model and the specific three dimensional model M2 are, for example, in the form of CAD files.

The man-machine interface 82 is, for example, a touchscreen or a keyboard.

The display unit 86 is for example a computer screen.

The calibration system is a set of calibration pattern specific to each component of the vehicle 1. Each calibration pattern is, for example, a three dimensional jig.

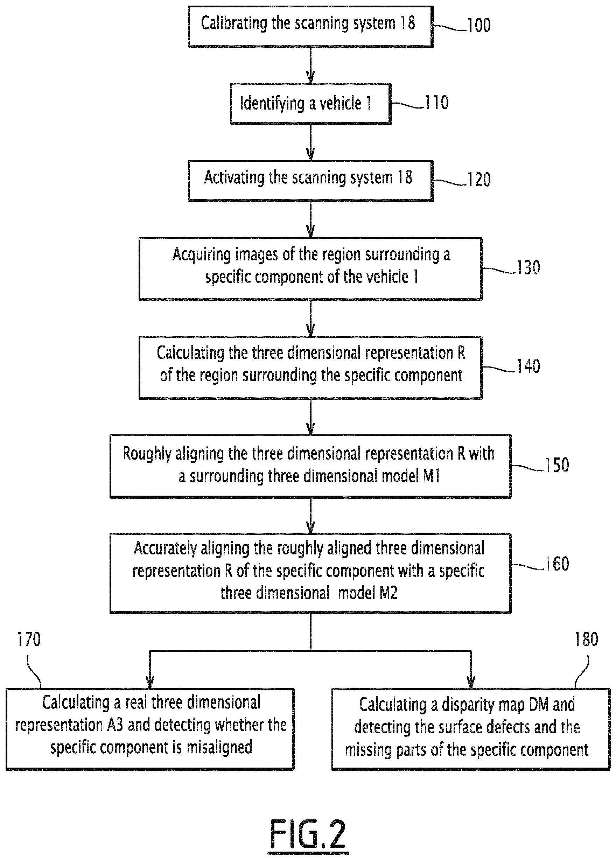

The method for detecting the bad positioning and the surface defects according to the invention will now be described as an example, with reference to Figure 2.

Initially, the detection method comprises a step 100 of calibrating the scanning system 18 of a detection device 10 as described above for each type of specific component of a vehicle 1.

The calibration step 100 comprises positioning the calibration pattern of the specific component in front of the lasers and the three dimensional cameras of the scanning system 18. Then, the calibration step 100 comprises illuminating the calibration pattern with the laser beam of each laser. The calibration step 100 further comprises taking, for each laser, an image of the intersection of the surface of the calibration pattern and the laser beam of the laser.

The calibration pattern's coordinates and the image taken for each laser are the input data of a SAL3D's computer algorithm which automatically computes the calibration parameters. SAL3D stands for Shape Analysis Library 3D and is a product of the company AQSENSE.

Then, the lasers and the three dimensional cameras of the scanning system 18 are positioned according to the calibration parameters.

The calibration step 100 allows the right positioning and orientation of the lasers and of the cameras of the scanning system 18 in the vicinity of a rail road 5.

The calibration step 100 is carried out by an operator using the calibration system of the detection device 10.

Thereafter, the detection method comprises a step 110 of identifying the vehicle 1 in motion on the rail road 5. Thus, the type and the unit number of the vehicle 1 are identified. These data are then sent to the calculator 30 and stored in the memory 74 of the calculator 30.

The identification step 110 is carried out by the identification system 22.

Then, the detection method comprises a step 120 of recording the speed of the vehicle 1 with the sensor input 26 and the position of the vehicle 1 with the inductive sensor 28.

These data are then transmitted to the identification system 22 and to the calculator 30.

Thanks to these data and to the reference library, the identification system 22 activates or deactivates the scanners corresponding to each specific component of the vehicle 1 in order to acquire images of the specific components. In other words, each scanner is triggered when the corresponding specific component is estimated being at the predetermined distance of the scanner and is deactivated when the corresponding specific component is not any more in the field of view of the scanners' cameras. Hence, the amount of three dimensional data scanned is reduced which allow a quicker treatment of these data.

Then, when a specific component of the vehicle 1 passes in the field of view of the cameras of a corresponding scanner, the detection method comprises a step 130 of illuminating the specific component of the vehicle 1 with the lasers of the scanner. Such an illumination highlights the intersection between the surface of the specific component and the laser beam.

This illuminating step 130 also comprises the acquisition of several images of the intersection between the surface of the specific component and the laser beam while the vehicle 1 is in motion. The acquisition of images for each specific component is performed with the cameras of the scanner corresponding to the specific component.

The images are acquired at a frequency of up to 1000 frames per second. Such a frequency makes it possible the three dimensional reconstruction of small component, such as component of the millimeter size. The acquired images are fed into queues or in FIFO (acronym of *First In, First Out*) structures so that they can be processed in sequence, following the same sequence induced by the vehicle 1 in motion. It is understood by "FIFO", a method for organizing and manipulating a data buffer, where the first entry, or 'head' of the queue, is processed first. A data buffer is a region of a physical memory storage used to temporarily store data while it is being moved from one place to another.

Then, the detection method comprises a step 140 of calculating from the acquired images of each specific component the three dimensional representation R of the region surrounding the specific component in the reference frame. Such a step uses a method called "laser triangulation". It is understood by "laser triangulation" a technique for generating three dimensional images of the surface of an object using at least one laser and one sensor such as a camera.

The step 140 is carried out by the calculation units of each camera of the scanners of the scanning system 18. Like this, the calculator 30 is prevented from intensive processing.

The obtained three dimensional representation R is then sent by the computing unit to the calculator 30.

Later, the detection method comprises a step 150 of roughly aligning, in the reference frame, the three dimensional representation R of each specific component of the vehicle 1 with the surrounding three dimensional model M1 of the specific component.

The alignment of the three dimensional representation R of a specific component with the surrounding three dimensional model M1 of this component is a three dimensional image. This image is called "roughly aligned three dimensional representation A1".

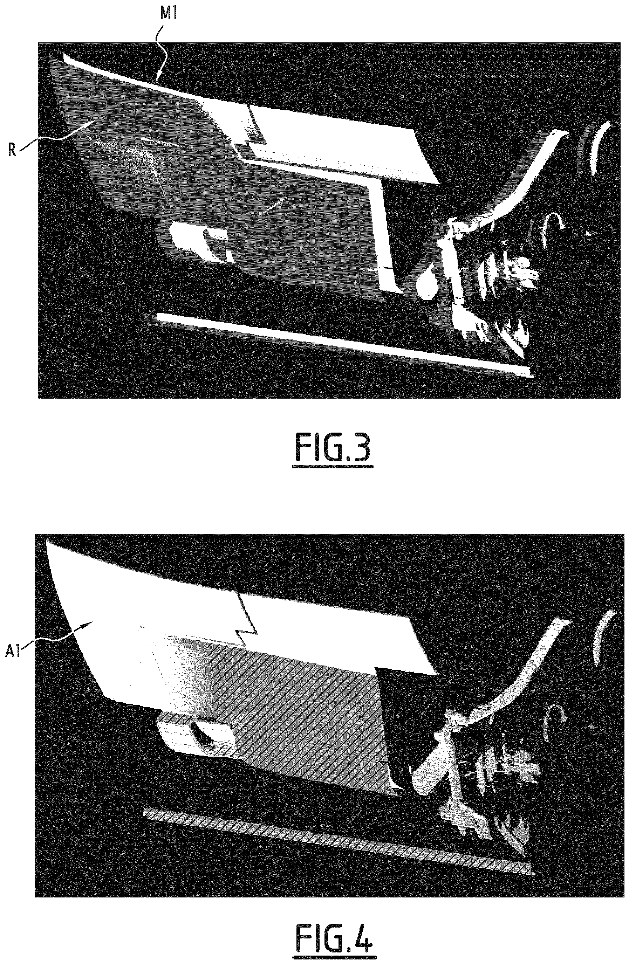

For instance, figure 3 and figure 4 represent a region surrounding a specific component. The specific component represented on this figure 3 and 4 is a side panel nose cone.

On figure 3, the three dimensional representation R of the region surrounding the specific component is represented in gray color, while the surrounding three dimensional model M1 is represented in white color. On this figure 3, the three dimensional representation R is nonaligned with the surrounding three dimensional model M1.

On figure 4, the three dimensional representation R is roughly aligned with the surrounding three dimensional model M1 and forms the roughly aligned three dimensional representation A1. The hachured zone on the roughly aligned three dimensional representation A1 appears to be badly positioned as compared to the surrounding three dimensional model M1.

The alignment of the three dimensional representation R with the surrounding three dimensional model M1 is achieved by using the Match3D tool contained in the SAL3D library of the company AQSENSE.

The roughly aligning step 150 also comprises calculating, for each specific component, the rough rigid transformation T1 allowing the alignment of the three dimensional representation R of the specific component with the surrounding three dimensional model M1 of the specific component. The roughly rigid transformation T1 is the rigid transformation from the three dimensional representation R to the roughly aligned three dimensional representation A1.

It is understood by "rigid transformation", a geometrical transformation that preserves the distances.

Each rough rigid transformation T1 is a square matrix of size 4x4. However, the rough rigid transformation T1 may also be a square matrix of size 3x3 with a vector having three components.

Each rough rigid transformation T1 contains all the information about the position and the orientation of the roughly aligned three dimensional representation A1 of a specific component compared to the specific three dimensional model M2 of this component.

The roughly aligning step 150 is carried out by the processor 70 of the calculator 30 in interaction with the software application 78 contained in the memory 74 of the calculator 30.

During the roughly aligning step 150, the rough rigid transformation T1 and the roughly aligned three dimensional representation A1 of each specific component of the vehicle 1 are stored in the memory 74 of the calculator 30.

Thereafter, the detection method comprises a step 160 of accurately aligning, in the reference frame, the roughly aligned three dimensional representation A1 of each specific component of the vehicle 1 with the specific three dimensional model M2 of this specific component.

The alignment of the roughly aligned three dimensional representation A1 of a specific component with the specific three dimensional model M2 of this component is a three dimensional image. This image is called "accurately aligned three dimensional representation A2".

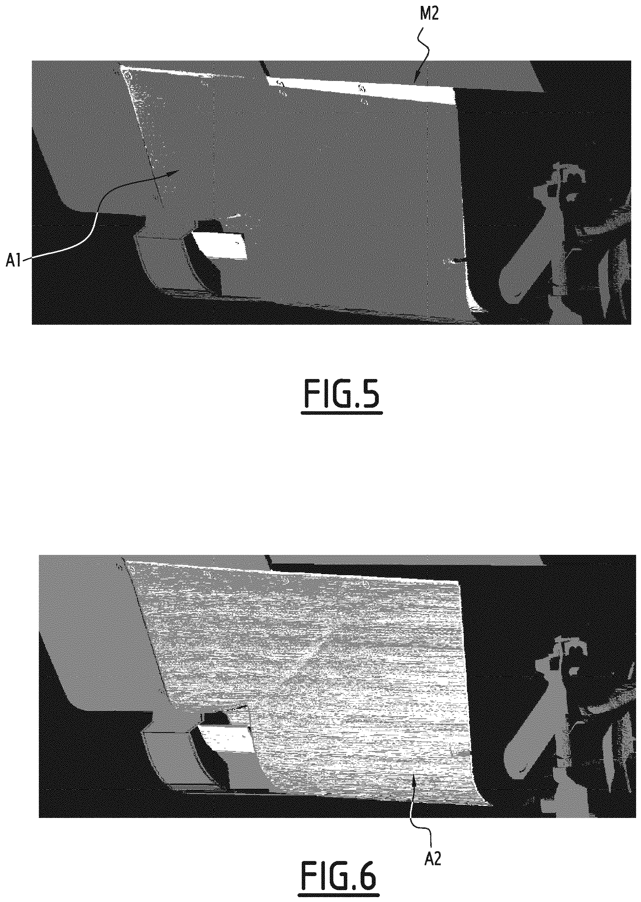

Figure 5 represents a part of the roughly aligned three dimensional representation A1 of figure 4. Indeed, on this figure 5 some parts of the roughly aligned three dimensional representation A1 have been cut in order to only keep the region close to the specific component. On this figure 5, the part of the roughly aligned three dimensional representation A1 is represented in gray color, while the specific three dimensional model M2 of the component is represented in white color.

On figure 6, the roughly aligned three dimensional representation A1 is accurately aligned with the specific three dimensional model M2 and forms the accurately aligned three dimensional representation A2. The accurately aligned three dimensional representation A2 is perfectly aligned on the specific three dimensional model M2.

The alignment of the roughly aligned three dimensional representation A1 with the specific three dimensional model M2 is achieved by using the Match3D tool contained in the SAL3D library of the company AQSENSE.

The accurately aligning step 160 also comprises calculating, for each specific component, the accurate rigid transformation T2 allowing the alignment of the roughly aligned three dimensional representation A1 of the specific component with the specific three dimensional model M2 of the specific component. The accurate rigid transformation T2 is the rigid transformation from the roughly aligned three dimensional representation A1 to the accurately aligned three dimensional representation A2.

Each accurate rigid transformation T2 is a square matrix of size 4x4. However, the accurate rigid transformation T2 may also be a square matrix of size 3x3 with a vector having three components.

Each accurate rigid transformation T2 contains all the information about the position and the orientation of the roughly aligned three dimensional representation A1 of a specific component compared to the specific three dimensional model M2 of this component.

The accurately aligning step 160 is carried out by the processor 70 of the calculator 30 in interaction with the software application 78 contained in the memory 74 of the calculator 30.

During the accurately aligning step 160, the accurate rigid transformation T2 and the accurately aligned three dimensional representation A2 of each specific component of the vehicle 1 are stored in the memory 74 of the calculator 30.

Then, the detection method comprises a step 170 of detecting the bad positioning of the specific component.
According to a first embodiment, the detection step 170 is made by analyzing the accurate rigid transformation T2.

According to a second embodiment, the detection step 170 comprises calculating the inverse of the accurate rigid transformation T2.

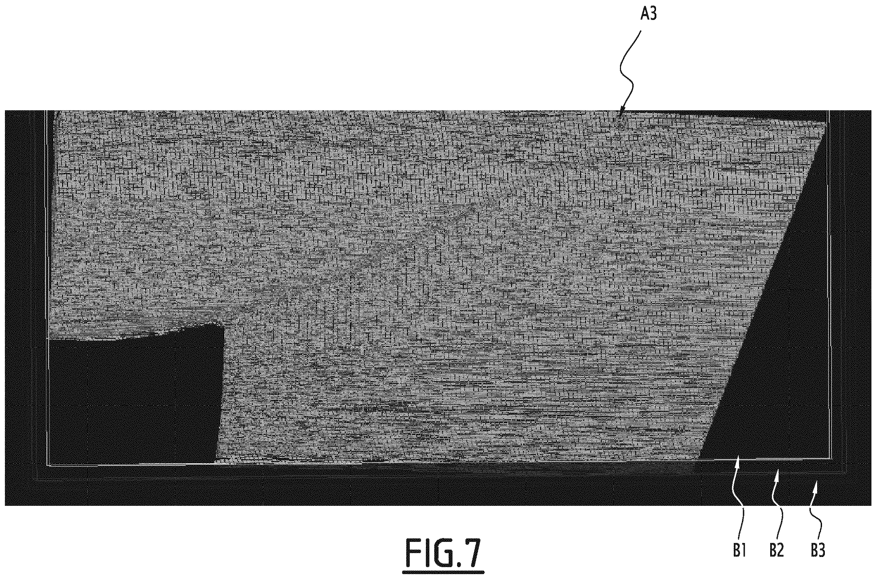

Then, the detection step 170 comprises applying the inverse of the accurate rigid transformation T2 on the specific three dimensional model M2 in order to obtain a real three dimensional representation A3 of the specific component alone. Thus, the accurate rigid transformation T2 is used to accurately remove the elements of the three dimensional representation R of the specific component which are not part of the specific component, without removing any parts of the specific component. The real three dimensional representation A3 obtained is a three dimensional image. The real three dimensional representation A3 is similar to a three dimensional representation R of the specific component in which the elements surrounding the specific component would have been removed. For instance, figure 7 represents the real three dimensional representation A3 of the specific component of figure 6.

During the detection step 170, the real three dimensional representation A3 is stored in the memory 74 of the calculator 30.

The detection step 170 comprises further the calculation of the distance between each pixel of the real three dimensional representation A3 and the corresponding pixel of the specific three dimensional model M2.

Then, the detection step 170 comprises the evaluation of the bad positioning of the specific component by evaluating whether the distance between each pixel of the real three dimensional representation A3 and the corresponding pixel of the three dimensional model M2 is comprised within at least one specified tolerance threshold. If the distance between each pixel of the real three dimensional representation A3 and the corresponding pixel of the three dimensional model M2 is not comprised in the at least one specified tolerance threshold, the specific component is considered to be badly positioned.

The specified tolerance thresholds are, for example, boxes enclosing the real three dimensional representation A3 of each specific component in the reference frame.

For example, on figure 7, three boxes are represented: a small box B1, a medium box B2 and a large box B3. The small box B1 is contained in both the medium box B2 and the large box B3. The medium box B2 is contained in the large box B3.

The dimensions of the small box B1 are set so that the small box B1 is in the closest to the ends of the real three dimensional representation A3. The dimensions of the medium box B2 are bigger than the dimensions of the small box B1. The dimensions of the large box B3 are bigger than the dimensions of the medium box B2.

The evaluation of the bad positioning of the specific component consists in measuring and reporting whether the real three dimensional representation A3 of the specific component is contained in the small box B1, in the medium box B2, in the large box B3 or in none of the boxes B1, B2, B3. If the specific component is contained in the small box B1, it is said to be accurately positioned. If the specific component is contained in the medium box B2 and not in the small box B1, it is said to be slightly bad positioned. If the specific component is contained in the large box B3 and not in the medium box B2, it is said to be rather bad positioned. Finally if the specific component is contained in none of the boxes, it is said to be completely bad positioned. However, if none of the parts of the specific component is found in any of the boxes, then it is assumed that the specific component is missing.

For example, the real three dimensional model A3 of figure 7 is said to be slightly bad positioned. Indeed, this real three dimensional representation A3 is not comprised in the small box B1 but is comprised in the medium box B2.

The results of the bad positioning evaluation are displayed by the display unit 86 of the calculator 30 which allows an operator to be aware of the alignment of the real three dimensional representation A3. For example, the display unit 86 of the calculator 30 display an image of the specific component which is green for the parts of the specific component inside the small box B1, blue for the parts of the specific component not contained in the small box B1 but contained in the medium box B2, orange for the parts of the specific component not contained in the medium box B2 but contained in the large box B3 and red for the parts of the specific component contained in none of the boxes.

The results of the bad positioning evaluation are stored in the memory 74 of the calculator 30.

An operator can therefore visualize the parts of the specific components which are badly positioned and estimate whether this bad positioning is unsafe.

The detection step 170 is carried out by the processor 70 of the calculator 30 in interaction with the software application 78 contained in the memory 74 of the calculator 30.

Optionally, the detection method comprises a step 180 of detecting the surface defects and/or the missing parts of the specific components of the vehicle 1 based on a disparity map DM of each specific component. The disparity map DM is an image displaying the accurately aligned three dimensional representation A2 and the difference between the accurately aligned three dimensional representation A2 and the specific three dimensional model M2. The disparity map DM is a three dimensional image. The disparity map DM can also be a two dimensional image.

In order to obtain the disparity map DM of a specific component, the detection step 180 comprises a step of calculating the difference between the accurately aligned three dimensional representation A2 and the specific three dimensional model M2. The difference is calculated in only one direction corresponding to one axis of the reference frame to allow reducing the duration of the calculations. More precisely, the difference is calculated in the second transversal direction corresponding to the elevation axis Z.

Then, the detection step 180 comprises a step of projecting the accurately aligned three dimensional representation A2 in a plan formed by the longitudinal axis X and the transversal axis Y of the reference frame.

The disparity map DM is the representation of the calculated difference and of the projection of the accurately aligned three dimensional representation A2 in a frame formed by the longitudinal axis X and the transversal axis Y of the reference frame. On the disparity map DM, the calculated difference is highlighted by levels of gray.

The calculation of the disparity map DM is achieved by using functions contained in the SAL3D library of the company AQSENSE.

The disparity map DM highlights any shape differences between the specific component and its three dimensional model, these differences being the surface defects or missing parts of the specific component. Hence, the surface defects dimensions of a specific component are reported in the three dimensions of the reference frame, as well as the number of defects on a surface of the specific component.

The disparity map DM can be displayed on the display unit 86.

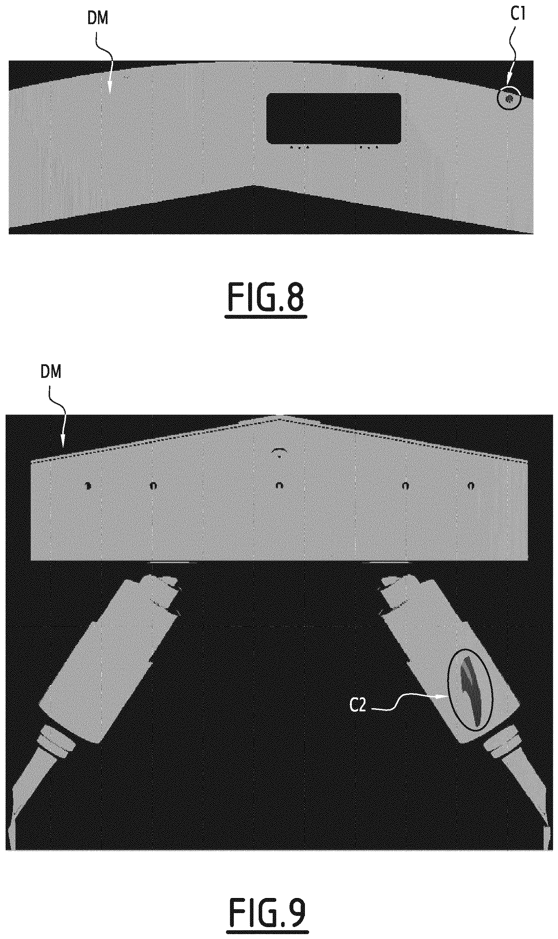

For example on figure 8, the missing part, such as a missing bolt, of a specific component is represented by a first circle C1, surrounding the location of the missing bolt on the disparity map DM of the specific component.

In addition to detect missing parts of the specific components, deformations on the surface of the specific component can be read on the disparity map DM.

For example, on figure 9, a surface defect of a specific component is represented by a second circle C2, surrounding the location of the surface defect on the disparity map DM of the specific component. The exact depth of the surface defects can also be displayed on the display unit 86.

The detection step 180 can be conducted in parallel to the detection step 170.

The detection step 180 is carried out by the processor 70 of the calculator 30 in interaction with the software application 78 contained in the memory 74 of the calculator 30.

The disparity map DM and results of the analysis of the disparity map DM are stored in the memory 74 of the calculator 30.

Thus, the detection method allows the automatic detection of bad positioning, surface defects or missing parts of specific components of a vehicle 1 in motion. The checked specific components can be very small, such as bolts, screws or nuts of the size of the millimeter. The checking procedure is therefore reproducible with no risks than an operator forget to check some specific component or to detect the bad positioning of one of the specific components of the vehicle 1.

The alignment process is very fast: its duration is inferior to 100 milliseconds with modern computers. No specialized processors or GPUs (*Graphics Processing Unit*) are required.

Moreover, the bad positioning evaluation is flexible to the extent that the specified tolerance thresholds can be changed by an operator.

The checked results such as the rigid transformations, the disparity map DM, and the roughly and accurately aligned three dimensional representation A2 of each specific component are stored in the memory 74 of the calculator 30. There is, therefore, a traceability of the checked results.

Moreover, the manual interventions of an operator are not any more needed, which reduces the time duration of the checking.

## Claims

1. A method for detecting the bad positioning and the surface defects of a specific component of a vehicle in motion, comprising:
- scanning (130) the region surrounding a specific component of a vehicle (1) in motion on a rail road (5) to obtain (140) a three dimensional representation (R) of the region surrounding the specific component,
- aligning (150) the three dimensional representation (R) with a surrounding three dimensional model (M1) of the region surrounding the specific component to obtain a roughly aligned three dimensional representation (A1),
**characterized in that**, the method also comprises :
- aligning (160) the roughly aligned three dimensional representation (A1) with a specific three dimensional model (M2) of the specific component to obtain an accurately aligned three dimensional representation (A2) and an accurate rigid transformation (T2), and
- analysing (170, 180) the bad positioning and the surface defects of the specific component by processing the accurately aligned three dimensional representation (A2) and the specific three dimensional model (M2), wherein, analysing the bad positioning of the specific component (170) comprises the analysis of the accurate rigid transformation (T2), and
analysing the surface defects or the missing parts of the specific component (180) comprises:
• calculating a disparity map (DM) including a difference between the accurately aligned three dimensional representation (A2) and the specific three dimensional model (M2), and
• detecting the surface defects or the missing parts of the specific component based on the disparity map (DM).

2. A method according to claim 1, wherein the analysis step (170) comprises :
- processing (170) the specific three dimensional model (M2) with the inverse of the accurate rigid transformation (T2) to obtain a real three dimensional representation (A3) of the specific component, and
- comparing the real three dimensional representation (A3) with the specific three dimensional model (M2).

3. A method according to claim 2, wherein the analysis step (170) comprises :
- evaluating (170) whether the distance between the real three dimensional representation (A3) and the specific three dimensional model (M2) is comprised within at least one specified tolerance threshold.

4. A method according to claim 3, wherein the or each specified tolerance threshold is defined by a box enclosing the specific three dimensional model (M2) of the specific component, the specific component being badly positioned when the real three dimensional representation (A3) is not contained in the box enclosing the specific three dimensional model (M2).

5. A method according to any one of the preceding claims, wherein the difference between the accurately aligned three dimensional representation (A2) and the specific three dimensional model (M2) of the disparity map (DM) is calculated in only one direction.

6. A method according to any one of the preceding claims, comprising, before the scanning step (130), a step of :
- identifying (110) the type and the unit number of the vehicle (1).

7. A method according to any one of the preceding claims, comprising, before the scanning step (130), a step of :
- activating (120) each camera of a scanner when the specific component is at a predetermined distance of the camera and deactivating the cameras otherwise.

8. A method according to any one of the preceding claims, wherein the accurate rigid transformation (T2) is a matrix of size 4x4 containing information about the position and the orientation of the specific component compared to the specific three dimensional model (M2).

9. A method according to any one of the preceding claims, wherein the specific components are chosen in a group comprising : a nose cone underframe fairing panel, a nose fearing strut, an eurobalise antenna, an obstacle deflector, a suspension reservoir, a AWS, a TPWS, a traction motor, a life guard, an underpan, a sander, a gearbox, a traction rod, an UGMS, an APC receiver, a side panel nose cone, a side skirt, a yaw damper, an access panel, a skirt access door, a plain axle end cover, a TASS speed sensor cover, an earth brush housing, a traction return housing, a WSP, a door, a door step, a track access device and a train gauge.

10. A detection device (10) for detecting the bad positioning and the surface defects of a specific component of a vehicle (1) in motion on a rail road (5), comprising :
- a scanning system (18) for scanning the region around the specific component, the scanning system (18) being configured to calculate a three dimensional representation (R) of the region around the specific component,
- a calculator (30) in interaction with a software application (78) configured to implement:
the alignment of the three dimensional representation (R) with a surrounding three dimensional model (M1) of the region surrounding the specific component to obtain a roughly aligned three dimensional representation (A1),
**characterized in that**, the calculator (30) in interaction with the software application (78) is also configured to implement:
the alignment of the roughly aligned three dimensional representation (A1) with a specific three dimensional model (M2) of the specific component to obtain an accurately aligned three dimensional representation (A2) and an accurate rigid transformation (T2), and
the analysis of the bad positioning of the specific component (170) comprising an analysis of the accurate rigid transformation (T2) and the analysis of the surface defects or the missing parts of the specific component (180) comprising:
• calculating (180) a disparity map (DM) including a difference between the accurately aligned three dimensional representation (A2) and the specific three dimensional model (M2), and
• detecting the surface defects or the missing parts of the specific component based on the disparity map (DM).

## Patentansprüche

1. Verfahren zum Nachweisen der Fehlpositionierung und von Oberflächendefekten einer spezifischen Komponente eines sich bewegenden Fahrzeugs, umfassend:
- Scannen (130) des Bereichs, der eine spezifische Komponente eines sich auf einem Schienenweg (5) bewegenden Fahrzeugs (1) umgibt, um eine dreidimensionale Darstellung (R) des die spezifische Komponente umgebenden Bereichs zu erhalten (140),
- Abgleichen (150) der dreidimensionalen Darstellung (R) mit einem umgebenden dreidimensionalen Modell (M1) des die spezifische Komponente umgebenden Bereichs, um eine grob abgeglichene dreidimensionale Darstellung (A1) zu erhalten,
**dadurch gekennzeichnet, dass** das Verfahren des Weiteren umfasst:
- Abgleichen (160) der grob abgeglichenen dreidimensionalen Darstellung (A1) mit einem spezifischen dreidimensionalen Modell (M2) der spezifischen Komponente, um eine genau abgeglichene dreidimensionale Darstellung (A2) und eine genaue steife Transformation (T2) zu erhalten, und
- Analysieren (170, 180) der Fehlpositionierung und der Oberflächendefekte der spezifischen Komponente durch Verarbeiten der genau abgeglichenen dreidimensionalen Darstellung (A2) und des spezifischen dreidimensionalen Modells (M2),
wobei das Analysieren der Fehlpositionierung der spezifischen Komponente (170) die Analyse der genauen steifen Transformation (T2) umfasst, und
das Analysieren der Oberflächendefekte oder der fehlenden Teile der spezifischen Komponente (180) umfasst:
• Berechnen einer Disparitätskarte (DM), die eine Abweichung zwischen der genau abgeglichenen dreidimensionalen Darstellung (A2) und dem spezifischen dreidimensionalen Modell (M2) einschließt, und
• Nachweisen der Oberflächendefekte oder der fehlenden Teile der spezifischen Komponente basierend auf der Disparitätskarte (DM).

2. Verfahren nach Anspruch 1, wobei der Analyseschritt (170) umfasst:
- Verarbeiten (170) des spezifischen dreidimensionalen Modells (N2) mit der Inversen der genauen steifen Transformation (T2), um eine reale dreidimensionale Darstellung (A3) der spezifischen Komponente zu erhalten, und
- Vergleichen der realen dreidimensionalen Darstellung (A3) mit dem spezifischen dreidimensionalen Modell (M2).

3. Verfahren nach Anspruch 2, wobei der Analyseschritt (170) umfasst:
- Bewerten (170), ob der Abstand zwischen der realen dreidimensionalen Darstellung (A3) und dem spezifischen dreidimensionalen Modell (M2) innerhalb zumindest einer spezifizierten Toleranzschwelle liegt.

4. Verfahren nach Anspruch 3, wobei die oder jede spezifizierte Toleranzschwelle durch einen Kasten definiert ist, der das spezifische dreidimensionale Modell (M2) der spezifischen Komponente umschließt, wobei die spezifische Komponente fehlpositioniert ist, wenn die reale dreidimensionale Darstellung (A3) nicht in dem Kasten enthalten ist, der das spezifische dreidimensionale Modell (M2) umschließt.

5. Verfahren nach einem der vorhergehenden Ansprüche, wobei die Abweichung zwischen der genau abgeglichenen dreidimensionalen Darstellung (A2) und dem spezifischen dreidimensionalen Modell (M2) der Disparitätskarte (DM) in nur einer Richtung berechnet wird.

6. Verfahren nach einem der vorhergehenden Ansprüche, vor dem Scanschritt (130) umfassend einen Schritt:
- des Identifizierens (110) der Art und Fahrzeugnummer des Fahrzeugs (1).

7. Verfahren nach einem der vorhergehenden Ansprüche, vor dem Scanschritt (130) umfassend einen Schritt:
- des Aktivierens (120) von jeder Kamera eines Scanners, wenn sich die spezifische Komponente in einem vorbestimmten Abstand zur Kamera befindet, und andernfalls des Deaktivierens der Kameras.

8. Verfahren nach einem der vorhergehenden Ansprüche, wobei die genaue steife Transformation (D2) eine Matrix der Größe 4x4 ist, die Informationen über die Position und die Orientierung der spezifischen Komponente verglichen mit dem spezifischen dreidimensionalen Modell (M2) enthält.

9. Verfahren gemäß einem der vorhergehenden Ansprüche, wobei die spezifischen Komponenten ausgewählt werden aus einer Gruppe, umfassend: eine Bugkonus-Unterrahmenverkleidung, eine Bugverkleidungsstrebe, eine Eurobalise-Antenne, einen Bahnräumer, ein Aufhängungsreservoir, ein AWS, ein TPWS, einen Fahrmotor, eine Leitplanke, einen Unterboden, einen Schleifer, ein Getriebe, eine Zugstange, ein UGMS, einen APC-Empfänger, einen Seitenwandbugkonus, eine Seitenschürze, einen Gierdämpfer, eine Zugangsplatte, eine Schürzenzugangstür, eine glatte Achsendabdeckung, eine TASS-Geschwindigkeitssensorabdeckung, ein Erdungsbürstengehäuse, ein Traktionsrücklaufgehäuse, eine WSP, eine Tür, eine Türstufe, eine Gleiszugangsvorrichtung und eine Spurweite.

10. Nachweisvorrichtung (10) zum Nachweisen der Fehlpositionierung und von Oberflächendefekten einer spezifischen Komponente eines sich auf einem Schienenweg (5) bewegenden Fahrzeugs (1), umfassend:
- ein Scansystem (18) zum Scannen des Bereichs um die spezifische Komponente, wobei das Scansystem (18) ausgelegt ist, um eine dreidimensionale Darstellung (R) des Bereichs um die spezifische Komponente zu berechnen,
- einen Rechner (30) in Wechselwirkung mit einer Softwareanwendung (78), die ausgelegt ist, um umzusetzen:
das Abgleichen der dreidimensionalen Darstellung (R) mit einem umgebenden dreidimensionalen Modell (M1) des die spezifische Komponente umgebenden Bereichs, um eine grob abgeglichenen dreidimensionale Darstellung (A1) zu erhalten, **dadurch gekennzeichnet, dass** der Rechner (30) in Wechselwirkung mit der Softwareanwendung (78) auch ausgelegt ist, um umzusetzen:
das Abgleichen der grob abgeglichenen dreidimensionalen Darstellung (A1) mit einem spezifischen dreidimensionalen Modell (M2) der spezifischen Komponente,
um eine genau abgeglichene dreidimensionale Darstellung (A2) und eine genaue steife Transformation (T2) zu erhalten, und
wobei das Analysieren der Fehlpositionierung der spezifischen Komponente (170) die Analyse der genauen steifen Transformation (T2) umfasst,
und das Analysieren der Oberflächendefekte oder der fehlenden Teile der spezifischen Komponente (180) umfasst:
• Berechnen (180) einer Disparitätskarte (DM), die eine Abweichung zwischen der genau abgeglichenen dreidimensionalen Darstellung (A2) und dem spezifischen dreidimensionalen Modell (M2) einschließt, und
• Nachweisen der Oberflächendefekte oder der fehlenden Teile der spezifischen Komponente basierend auf der Disparitätskarte (DM).

## Revendications

1. Procédé de détection du mauvais positionnement et de défauts de surface d'un composant spécifique d'un véhicule en mouvement, comprenant :
- le balayage (130) de la région entourant un composant spécifique d'un véhicule (1) en mouvement sur une route ferroviaire (5), en vue d'obtenir (140) une représentation tridimensionnelle (R) de la région entourant le composant spécifique,
- l'alignement (150) de la représentation tridimensionnelle (R) avec un modèle tridimensionnel environnant (M1) de la région entourant le composant spécifique, en vue d'obtenir une représentation tridimensionnelle grossièrement alignée (A1),
**caractérisé en ce que** le procédé comprend également :
- l'alignement (160) de la représentation tridimensionnelle grossièrement alignée (A1) avec un modèle tridimensionnel spécifique (M2) du composant spécifique, en vue d'obtenir une représentation tridimensionnelle alignée avec précision (A2) et une transformation rigide précise (T2), et
- l'analyse (170, 180) du mauvais positionnement et des défauts de surface du composant spécifique en traitant la représentation tridimensionnelle alignée avec précision (A2) et le modèle tridimensionnel spécifique (M2),
dans lequel, l'analyse du mauvais positionnement du composant spécifique (170) comprend l'analyse de la transformation rigide précise (T2), et
l'analyse des défauts de surface ou des parties manquantes du composant spécifique (180) comprend :
• le calcul d'une carte de disparité (DM) incluant une différence entre la représentation tridimensionnelle alignée avec précision (A2) et le modèle tridimensionnel spécifique (M2), et
• la détection des défauts de surface ou des parties manquantes du composant spécifique sur la base de la carte de disparité (DM).

2. Procédé selon la revendication 1, dans lequel l'étape d'analyse (170) comprend :
- le traitement (170) du modèle tridimensionnel spécifique (M2) avec l'inverse de la transformation rigide précise (T2), en vue d'obtenir une représentation tridimensionnelle réelle (A3) du composant spécifique, et
- la comparaison de la représentation tridimensionnelle réelle (A3) au modèle tridimensionnel spécifique (M2).

3. Procédé selon la revendication 2, dans lequel l'étape d'analyse (170) comprend :
- l'évaluation (170) si la distance entre la représentation tridimensionnelle réelle (A3) et le modèle tridimensionnel spécifique (M2) est comprise dans au moins un seuil de tolérance spécifié.

4. Procédé selon la revendication 3, dans lequel le ou chaque seuil de tolérance spécifié est défini par une boîte renfermant le modèle tridimensionnel spécifique (M2) du composant spécifique, le composant spécifique étant mal positionné lorsque la représentation tridimensionnelle réelle (A3) n'est pas contenue dans la boîte renfermant le modèle tridimensionnel spécifique (M2).

5. Procédé selon l'une quelconque des revendications précédentes, dans lequel la différence entre la représentation tridimensionnelle alignée avec précision (A2) et le modèle tridimensionnel spécifique (M2) de la carte de disparité (DM) est calculée dans une seule direction.

6. Procédé selon l'une quelconque des revendications précédentes, comprenant, avant l'étape de balayage (130), une étape :
- d'identification (110) du type et du numéro d'unité du véhicule (1).

7. Procédé selon l'une quelconque des revendications précédentes, comprenant, avant l'étape de balayage (130), une étape :
- d'activation (120) de chaque caméra d'un scanneur lorsque le composant spécifique se situe à une distance prédéterminée de la caméra, et désactiver les caméras dans le cas contraire.

8. Procédé selon l'une quelconque des revendications précédentes, dans lequel la transformation rigide précise (T2) est une matrice de taille 4 x 4 contenant des informations concernant la position et l'orientation du composant spécifique par rapport au modèle tridimensionnel spécifique (M2).

9. Procédé selon l'une quelconque des revendications précédentes, dans lequel les composants spécifiques sont choisis dans un groupe comprenant : un panneau de carénage de sous-châssis de coiffe, une jambe de force de coiffe, une antenne eurobalise, un déflecteur d'obstacles, un réservoir de suspension, un AWS, un TPWS, un moteur de traction, une glissière de protection, une plaque inférieure, une sablière, une boîte à engrenages, une barre de traction, un UGMS, un récepteur APC, une coiffe de panneau latéral, une jupe latérale, un amortisseur de lacet, un panneau d'accès, une porte d'accès de jupe, une plaque-couvercle d'essieu lisse, un couvercle de capteur de vitesse TASS, un carter de brosse de terre, un carter de retour de traction, un WSP, une porte, un marchepied de porte, un dispositif d'accès de voie et un calibre de train.

10. Dispositif de détection (10) destiné à détecter le mauvais positionnement et les défauts de surface d'un composant spécifique d'un véhicule (1) en mouvement sur une route ferroviaire (5), comprenant :
- un système de balayage (18) pour balayer la région entourant un composant spécifique, le système de balayage (18) étant configuré de manière à calculer une représentation tridimensionnelle (R) de la région entourant le composant spécifique,
- un calculateur (30) en interaction avec une application logicielle (78) configurée de manière à mettre en oeuvre :
l'alignement de la représentation tridimensionnelle (R) avec le modèle tridimensionnel environnant (M1) de la région entourant le composant spécifique, en vue d'obtenir une représentation tridimensionnelle grossièrement alignée (A1),
**caractérisé en ce que** le calculateur (30) en interaction avec l'application logicielle (78) est également configuré de manière à mettre en oeuvre :
l'alignement de la représentation tridimensionnelle grossièrement alignée (A1) avec un modèle tridimensionnel spécifique (M2) du composant spécifique, en vue d'obtenir une représentation tridimensionnelle alignée avec précision (A2) et une transformation rigide précise (T2), et
l'analyse du mauvais positionnement du composant spécifique (170) comprenant une analyse de la transformation rigide précise (T2) et/ou de la représentation tridimensionnelle alignée avec précision (A2), et
l'analyse des défauts de surface ou des parties manquantes du composant spécifique (180) comprenant les étapes de :
• calcul (180) d'une carte de disparité (DM) incluant une différence entre la représentation tridimensionnelle alignée avec précision (A2) et le modèle tridimensionnel spécifique (M2) ; et
• détection des défauts de surface ou des parties manquantes du composant spécifique sur la base de la carte de disparité (DM).
